# EUROPÄISCHE PATENTSCHRIFT

(11) **EP 4 303 444 B1**
(45) Veröffentlichungstag und Bekanntmachung des Hinweises auf die Patenterteilung: **27.08.2025**
(21) Anmeldenummer: 23183565.3
(22) Anmeldetag: 05.07.2023
(51) Int. Cl.: F04D 13/06, F04D 29/42, H02K 11/33, F04D 29/58

(54) **KREISELPUMPE MIT EINEM GEHÄUSE**
CENTRIFUGAL PUMP WITH A CASING
POMPE CENTRIFUGE AVEC CARTER

(30) Priorität: 05.07.2022 LU 102976
(43) Veröffentlichungstag der Anmeldung: 10.01.2024
(73) Patentinhaber: WILO SE, 44263 Dortmund (DE)
(72) Erfinder: Blöcker, Gerrit, 44263 Dortmund (DE); Budy, Domimic, 44263 Dortmund (DE); Reupke, Jens, 44263 Dortmund (DE)
(74) Vertreter: Michalski Hüttermann & Partner Patentanwälte mbB

(56) Entgegenhaltungen:
- EP-A1- 3 667 873
- DE-A1- 102007 054 060
- DE-A1- 102016 206 402
- DE-A1- 102016 206 404
- DE-A1- 102017 106 613

## Beschreibung

### Technisches Gebiet

Die Erfindung betrifft eine Kreiselpumpe aufweisend einen Motor zum Fördern eines Fluids und ein Gehäuse aufweisend eine Leiterplatte. Die Erfindung betrifft ferner ein Verfahren zum Anordnen eines elektronischen Bauelements in einem Gehäuse einer Kreiselpumpe aufweisend einen Motor zum Fördern eines Fluids. Die Erfindung betrifft weiterhin eine entsprechende Verwendung.

### Hintergrund der Erfindung

Kreiselpumpen sind aus dem Stand der Technik bekannt und dienen zum Fördern eines Fluids mittels einer Drehbewegung eines Laufrades. Das zu fördernde Fluid tritt über eine Saugöffnung in einen Pumpenraum der Kreiselpumpe ein, wird von dem rotierenden Laufrad erfasst und in der Folge in einen Leitungsabschnitt, der auch als Druckrohr bezeichnet wird, befördert.

Derartige Kreiselpumpen weisen oftmals ein Gehäuse auf, welches zweigeteilt als Motorgehäuse und Elektronikgehäuse gestaltet sein kann. In dem Motorgehäuse ist ein Motor zum Antreiben des Laufrads und in dem Elektronikgehäuse ist eine Leiterplatte mit elektronischen Bauelementen vorgesehen, die vielfach einen Frequenzumrichter zum Ansteuern des Motors ausbilden. Die elektronischen Bauelemente umfassen regelmäßig Kondensatoren und Spulen, die in Abhängigkeit von der Pumpenleistung der Kreiselpumpe hinsichtlich ihres in den Elektronikgehäuse benötigten Bauraums wesentlich großvolumigen sind als beispielsweise ebenso für eine Steuerung der Kreiselpumpe benötigte Widerstände, Mikroprozessoren und Transistoren.

Trotz hoher Packungsdichte derartiger elektronischer Bauelemente wird regelmäßig unverhältnismäßig viel Platz für eine solche Leiterplatte in dem Gehäuse einer Kreiselpumpe benötigt. Infolge davon muss das Gehäuse der Kreiselpumpe unverhältnismäßig groß dimensioniert werden, was zu entsprechenden Mehrkosten bei einer Herstellung und Einschränkungen bei einer Installation der Kreiselpumpe unter beengten Platzverhältnissen führt.

DE 10 2016 206402 A1 beschreibt einen Kreiselpumpenmotor, umfassend einen Permanentmagnetrotor, einen durch einen Spalttopf vom Permanentmagnetrotor getrennten bewickelten Stator, einer Leiterplatte, auf welche ein großes elektronisches Bauteil elektrisch angeschlossen ist und einem Motorgehäuse mit einem Steckeranschluss.

DE 10 2017 106613 A1 beschreibt eine Fluidmaschine umfassend ein Gehäuse mit einem Ansauganschluss, durch den Fluid angesaugt wird, einen in dem Gehäuse beherbergten Elektromotor und eine Antriebsvorrichtung, die konfiguriert ist, um den Elektromotor anzutreiben.

### Beschreibung der Erfindung

Ausgehend von dieser Situation ist es eine Aufgabe der vorliegenden Erfindung, eine Kreiselpumpe, und ein entsprechendes Verfahren sowie eine entsprechende Verwendung, anzugeben, die in ihren Abmessungen kompakter und daher kostengünstiger herzustellen ist.

Die Aufgabe der Erfindung wird durch die Merkmale der unabhängigen Ansprüche gelöst. Vorteilhafte Ausgestaltungen sind in den Unteransprüchen angegeben.

Demnach wird die Aufgabe gelöst durch eine Kreiselpumpe aufweisend einem Motor zum Fördern eines Fluids und ein Gehäuse, wobei in dem Gehäuse eine Leiterplatte, eine mit der Leiterplatte elektronisch leitend verbundene Spule, aufweisend eine Unterseite und eine Oberseite, und eine auf der Leiterplatte angeordnete Abstandseinrichtung vorgesehen ist, die Unterseite der Spule auf der Abstandseinrichtung und die Spule derart beabstandet zu der Leiterplatte angeordnet ist, und die Oberseite der Spule innenseitig thermisch an das Gehäuse angebunden ist, wobei die Abstandseinrichtung tischartig mit Beinen gestaltet ist, welche Beine an der Leiterplatte befestigt sind.

Dadurch, dass die Spule beabstandet zu der Leiterplatte angeordnet ist, lässt sich eine höhere Packungsdichte an elektronischen Bauelementen auf der Leiterplatte erzielen, da unter der Spule weitere elektronische Bauelemente auf der Leiterplatte angeordnet werden können. Gegenüber aus dem Stand der Technik bekannten Ausgestaltungen kann derart die Abmessung der Leiterplatte und damit des Gehäuses der Kreiselpumpe verkleinert werden, was zu einem kompakteren Design der Kreiselpumpe und geringeren Herstellungskosten für die Kreiselpumpe führt. Zudem erlaubt die thermische Anbindung an das Gehäuse einerseits eine bessere Wärmeübertragung zwecks verbesserter Kühlung der Spule sowie andererseits eine verbesserte Fixierung der Spule in dem Gehäuse, sodass die Spule unempfindlicher gegenüber regelmäßig bei Kreiselpumpen auftretenden Schwingungen wird.

Die Kreiselpumpe eignet sich grundsätzlich zur Förderung jeglichen Fluids. Aufgrund ihrer Robustheit gegenüber Feststoffen und Chemikalien eignet sich die Kreiselpumpe insbesondere zur Verwendung als Schmutzwasser- und/oder Abwasser-Tauchpumpe. Schmutzwasser- und/oder Abwasser-Tauchpumpen dienen insbesondere zum Abpumpen von verdrecktem Wasser beispielsweise von Hochwasser, in überfluteten Baugruben, in Waschküchen, in schlammigen Gruben, in Biotopen und/oder von Gartenteichen, von Sickerschächten sowie in Kellern, und insbesondere zum Pumpen von Wasser mit verschiedenen Verunreinigungsgraden wie beispielsweise Steine, Schlamm Geröll oder Fäkalien. Darüber hinaus kann die Kreiselpumpe auch für eine Heizung mit Heizkörpern, eine Radiatorheizung, eine Fußbodenheizung, eine Deckenkühlung, eine Wasserzirkulation in einer Trinkwasseranlage oder eine Trinkwasseranlage mit Speicherladesystem verwendet werden, wobei vorstehende Aufzählung nicht abschließend ist, sondern weitere, hier nicht genannte Anlagenarten umfasst sein können.

Der Motor ist bevorzugt innerhalb des Gehäuses angeordnet, welches Gehäuse bevorzugt feuchtigkeitsdicht gestaltet ist. Durch den Motor wird regelmäßig ein über eine Motorwelle an den Motor angebundenes Laufrad zum Fördern des Fluids angetrieben. Das Gehäuse weist bevorzugt eine zylinderartige Form auf, wobei an einer Stirnseite das Laufrad und gegenüberliegend dazu an der anderen Stirnseite die Leiterplatte vorgesehen ist, sodass der Motor zwischen dem Laufrad und der Leiterplatte angeordnet ist. Die Leiterplatte, englisch printed circuit board, ist bevorzugt aus einem elektrisch isolierenden Material wie faserverstärkter Kunststoff mit daran haftenden, leitenden Verbindungen als Leiterbahnen ausgestaltet. Auch wenn sich die Leiterplatte grundsätzlich axial erstrecken kann, ist bevorzugt vorgesehen, dass sich die Leiterplatte radial in Bezug auf das zylinderartige Gehäuse erstreckt, was eine kompakte Bauweise der Kreiselpumpe ermöglicht. Entsprechend ist besonders bevorzugt, wenn die Leiterplatte eine kreisrunde Form aufweist, wobei auch andere Formen denkbar sind.

Die Spule ist bevorzugt mit den Leiterbahnen der Leiterplatte verlötet. Weiter bevorzugt sind Anschlüsse der Spule, insbesondere Drahtanschlüsse, von der beabstandeten Position der Spule auf die Leiterplatte herunter geführt. Dazu können die Anschlüsse, typischerweise zwei oder vier Anschlüsse, beispielsweise durch Bohrungen einer Oberfläche der Abstandseinrichtung hindurchgeführt sein oder außen an der Abstandseinrichtung auf die Leiterplatte geführt sein. Bevorzugt liegt die Spule mit ihrer Unterseite berührend auf der Abstandseinrichtung auf. Auf der Abstandseinrichtung können eine Mehrzahl Spulen vorgesehen sein, beispielsweise 2, 3 oder 4 Spulen, die nebeneinander auf der Abstandseinrichtung vorgesehen sind. Auf der Abstandseinrichtung angeordnet bedeutet insbesondere, dass die Spule in Bezug auf die Leiterplatte von der Abstandseinrichtung weg orientiert angeordnet ist. Die Spule weist bevorzugt eine Induktivität von 2, 3, 5, 7 oder 10 mH auf.

Ebenso ist alternativ oder zusätzlich denkbar, dass die Spule an der Abstandseinrichtung vorgesehen ist, jedoch hin zu der Leiterplatte orientiert ist und ebenso beabstandet zu der Leiterplatte angeordnet ist. Insofern können zwei Spulen an der Abstandseinrichtung vorgesehen sein, einmal von der Grundfläche hin zur Leiterplatte orientiert und einmal von der Grundfläche weg von der Leiterplatte orientiert ist. Derart können sogar drei Ebenen von elektronischen Bauelementen vorgesehen sein. Beabstandet bedeutet, dass die Spule, abgesehen von den Anschlüssen, nicht auf der Leiterplatte aufliegt, insbesondere die Leiterplatte nicht berührt.

Beabstandet bedeutet insbesondere, dass Wicklungen der Spule beispielsweise 2, 3, 5, 6 oder 10 cm beabstandet von der Leiterplatte angeordnet sind. Daneben sind auch andere Abstände denkbar. Als Spule wird insbesondere eine oder mehrere Wicklungen verstanden, die geeignet sind, ein Magnetfeld zu erzeugen oder zu detektieren, oder als Filter wirken, insbesondere ein induktives passives Bauelement, dessen wesentliche Eigenschaft eine definierte Induktivität ist. Bevorzugt ist die Spule zylinderartig gestaltet, wobei die Stirnflächen die Unterseite und die Oberseite ausbilden. Thermisch angebunden bedeutet, dass die Spule Wärme an das Gehäuse abgeben kann.

Nach einer bevorzugten Ausgestaltung weist die Kreiselpumpe wenigstens ein elektronisches Bauelement auf, welches zwischen der Spule und der Leiterplatte angeordnet ist. Bevorzugt ist das elektronische Bauelement unterhalb der Abstandseinrichtung angeordnet und/oder elektronisch leitend mit der Leiterplatte verbunden. Das elektronische Bauelement kann ein Kondensator, insbesondere ein quaderartiger Folienkondensator, eine weitere Spule, einen Widerstand, einen Transistor und/oder eine Kombination und/oder Mehrzahl der vorgenannten elektronischen Bauelemente umfassen. Durch die derartige Anordnung des elektronischen Bauelements und der Spule mittels der Abstandseinrichtung übereinander wird der Bauraum der elektronischen Bauelemente gegenüber einer Anordnung nur auf einer Ebene verringert, sodass die Größe der Leiterplatte und damit auch der Kreiselpumpe verkleinert werden kann.

Gemäß einer anderen bevorzugten Ausgestaltung liegt die Oberseite der Spule berührend an dem Gehäuse an und/oder ist zwischen der Oberseite der Spule und dem Gehäuse eine Wärmeleitpaste vorgesehen ist. Bevorzugt liegt die Spule, im Falle einer zylinderartigen Ausgestaltung, mit ihrer gesamten Stirnfläche und besonders bevorzugt mit einem Teil der Mantelfläche an dem Gehäuse an, wobei sich die Stirnfläche der Spule bevorzugt parallel zur Stirnfläche des Gehäuses erstreckt. Zusätzlich oder alternativ kann zwischen der Spule und dem Gehäuse zwecks besserer Wärmeübertragung die Wärmeleitpaste, auch Gap-Filler oder Gap-Pad genannt, vorgesehen sein. Die Wärmeleitpaste kann bevorzugt Silikonöl umfassen, wobei eine silikonfreie Wärmeleitpaste aus Polyethylenglykol (PEG) mit Füllstoff Zinkoxid, oder mit Aluminium-, Kupfer-, Graphit- und Silberpartikel vorgesehen sein kann.

Nach einer bevorzugten Weiterbildung weist das Gehäuse außenseitig im Bereich der Spule Kühlrippen auf. Bevorzugt sind eine Mehrzahl Kühlrippen vorgesehen, die sich über ein Teil oder die vollständige Stirnfläche des Gehäuses erstrecken. Im Bereich der Spule bedeutet insbesondere, dass die Oberseite der Spule an der Innenseite des Gehäuses und die Kühlrippe an der entsprechenden Außenseite des Gehäuses vorgesehen ist, insbesondere in axialer Richtung. Durch die Kühlrippen wird eine Vergrößerung der Außenseite des Gehäuses erreicht, um eine Wärmeübertragung an die Umgebung und damit eine Kühlung der Spule zu verbessern. Dazu können die Kühlrippen in das Gehäuse eingefräst oder durch eine Gussform des Gehäuses hergestellt werden.

Gemäß einer anderen bevorzugten Ausgestaltung ist die Abstandseinrichtung mechanisch mit der Leiterplatte verbunden, insbesondere mittels Rasthaken, und/oder ist die Abstandseinrichtung mit der Leiterplatte verlötet. Durch die mechanische Verbindung wird die Abstandseinrichtung und derart die darauf vorgesehene Spule unempfindlicher gegenüber Schwingungen der Kreiselpumpe, welche regelmäßig beim Betrieb der Kreiselpumpe auftreten können. Darüber hinaus kann die Abstandseinrichtung mit der Leiterplatte verklebt, verschraubt oder in sonstiger Weise ortsfest mit der Leiterplatte verbunden sein.

Erfindungsgemäß ist die Abstandseinrichtung tischartig mit Beinen gestaltet, welche Beine an der Leiterplatte befestigt sind. Die Beine erstrecken sich bevorzugt senkrecht von einer die Spule aufnehmen Grundfläche der Abstandseinrichtung weg hin zur Leiterplatte. Die Grundfläche erstreckt sich bevorzugt parallel zur Leiterplatte. Bevorzugt weist die Abstandseinrichtung drei oder vier oder noch mehr Beine auf, welche insbesondere an Ecken der Grundfläche vorgesehen sind.

Die Grundfläche kann rechteckig oder quadratisch gestaltet sein, wobei auch andere Formen denkbar sind. Anschlüsse der Spule sind bevorzugt entlang der Beine von der Leiterplatte hin zur Spule geführt und weiter bevorzugt mit Leiterbahnen der Leiterplatte verlötet, um eine ortsfeste Fixierung der Spule in Bezug auf die Leiterplatte zu erreichen. Die Abstandseinrichtung kann aus Kunststoff gestaltet sein, wobei auch andere Materialien wie Metall denkbar sind. Ebenso können die Beine aus Kunststoff gestaltet sein, wobei metallene Lötfüße an Ende der Beine zum Verlöten mit der Leiterplatte vorgesehen sein können.

Gemäß einer anderen bevorzugten Ausgestaltung weist das Gehäuse innenseitig eine Ausnehmung auf, von welcher die Oberseite der Spule insbesondere formschlüssig aufgenommen ist. Die Ausnehmungen kann als Aussparung und/oder kreisrund gestaltet sein, wobei ein Innendurchmesser einer solchen kreisrunden Aussparung zum Außendurchmesser der Spule korrespondiert. Mit einer derartigen Ausnehmung wird einerseits eine besonders verlässliche Fixierung der Spule an dem Gehäuse erreicht, wodurch Beschädigungen an der Spule beispielsweise durch Schwingungen verhindert werden, und andererseits eine hohe Wärmeübertragung von der Spule auf das Gehäuse insbesondere hin zu den Kühlrippen erreicht.

Nach einer bevorzugten Weiterbildung weist die Kreiselpumpe wenigstens einen Kondensator auf, welcher neben der Abstandseinrichtung auf der Leiterplatte angeordnet ist und insbesondere innenseitig an dem Gehäuse anliegt. Derart kann der Kondensator durch das Gehäuse ebenso wie die Spule ortsfest gehalten und Wärme von dem Kondensator auf das Gehäuse übertragen werden, wobei an dem Gehäuse auch eine zu der Form des Kondensators korrespondierende Ausnehmung vorgesehen sein kann. Mit anderen Worten kann der Kondensator eine von der Leiterplatte weg orientierte Erstreckung aufweisen, die der von der Leiterplatte weg orientierten Erstreckung der Abstandseinrichtung zusammen mit der darauf angeordneten Spule gleicht oder im Wesentlichen gleicht. Selbstredend kann eine Mehrzahl Kondensatoren auf der Leiterplatte vorgesehen sein. Bevorzugt ist der Kondensator als Folienkondensator, als Elektrolytkondensator und/oder aufweisend eine Zylinderform ausgestaltet. Bei der bevorzugt weist der Kondensator eine Kapazität von 0,5, 1, 3 oder 5 µF auf.

Gemäß einer anderen bevorzugten Ausgestaltung ist auf der Leiterplatte ein Frequenzumrichter für den Motor umfassend die Spule vorgesehen. Insbesondere bilden die Spule, der Kondensator und die weiteren elektronischen Bauteile den Frequenzumrichter aus. Der Frequenzrichter weist bevorzugt einen Gleichrichter, der einen Gleichspannungs-Zwischenkreis speist, und einen aus diesem Zwischenkreis gespeisten Wechselrichter auf, wobei ein Zwischenkreis-Kondensator, häufig ein Elektrolytkondensator, zur Glättung der Gleichspannung dient und der Kondensator und die Spule zur Entstörung dienen kann. Der Wechselrichter weist bevorzugt Leistungstransistoren auf, beispielsweise MOSFETs, IBGTs oder IGCTs. Neben den Frequenzumrichter kann auch eine Steuerung für den Motor und/oder den Frequenzumrichter umfassend einen Mikrocontroller vorgesehen sein.

Nach einer bevorzugten Weiterbildung weist das Gehäuse ein den Motor aufnehmendes Motorgehäuse und ein die Leiterplatte aufnehmendes Elektronikgehäuse auf und ist das Elektronikgehäuse auf das Motorgehäuse aufgesetzt. Das Motorgehäuse und das Elektronikgehäuse können insofern zweistückig oder einstückig gestaltet sein. Das Elektronikgehäuse ist bevorzugt topfartig gestaltet, wobei die Kühlrippen an der Stirnfläche des Topfes vorgesehen sind. Das Motorgehäuse und/oder das Elektronikgehäuse weisen ferner bevorzugt eine zylinderartige Form auf, wobei das topfartige Elektronikgehäuse mit seinem Rand auf das Motorgehäuse aufgesetzt sein kann, sodass das Elektronikgehäuse und das Motorgehäuse axial hintereinander angeordnet sind. Sowohl das Elektronikgehäuse als auch das Motorgehäuse sind bevorzugt aus Metall gestaltet, insbesondere Grauguss. Bevorzugt sind das Elektronikgehäuse und das Motorgehäuse miteinander verschraubt. Von der Leiterplatte führen bevorzugt Kabel durch eine Stirnfläche des Motorgehäuse hin zum Motor. Das Motorgehäuse und/oder das Elektronikgehäuse können jeweils feuchtigkeitsdicht gestaltet sein.

Die Aufgabe der Erfindung wird weiterhin gelöst durch ein Verfahren zum Anordnen einer Spule, aufweisend eine Unterseite und eine Oberseite, in einem Gehäuse einer Kreiselpumpe aufweisend eine Motorgehäuse mit einem Motor zum Fördern eines Fluids, mit den Schritten:
Anordnen einer Abstandseinrichtung auf einer Leiterplatte in dem Gehäuse, wobei die Abstandseinrichtung tischartig mit Beinen gestaltet ist, welche Beine an der Leiterplatte befestigt sind,
Anordnen der Unterseite der Spule auf der Abstandseinrichtung, so dass die Spule beabstandet zu der Leiterplatte angeordnet ist,
elektronisch leitendes Verbinden der Spule mit der Leiterplatte, und
thermisches Anbinden der Oberseite der Spule an das Gehäuse.

Durch das vorgeschlagene Verfahren lässt sich die Packungsdichte elektronischer Bauelemente auf der Leiterplatte erhöhen, da in anderen Worten die Spule in einer zweiten Ebene angeordnet wird, sodass in der ersten Ebene ein Teil der elektronischen Bauelemente auf der Leiterplatte angeordnet werden kann. Als unmittelbare Konsequenz davon lässt sich die Größe der Leiterplatte und das Volumen der Kreiselpumpe reduzieren, was zu Kosteneinsparungen aufgrund geringerem Materialverbrauch für das Gehäuse führt. Derart wird es möglich, die Leiterplatte radial erstreckend in dem Gehäuse vorzusehen.

Ferner lässt sich durch das thermische Anbinden der Oberseite der Spule an das Gehäuse einerseits eine bessere Wärmeabfuhr von der Spule an das Gehäuse erreichen. Andererseits wird die Spule nicht nur an der Leiterplatte sondern auch durch das Gehäuse ortsfest in diesem fixiert und wird insofern weniger anfällig gegenüber Beschädigungen durch Schwingungen.

Gemäß einer bevorzugten Weiterbildung weist das Verfahren den Schritt auf:
Vergießen der Leiterplatte, der Abstandseinrichtung und der Spule in dem Gehäuse.

Durch ein derartiges Vergießen lassen sich die Spule, die Abstandseinrichtung sowie weitere auf der Leiterplatte vorgesehene elektronische Bauteile ortsfest an dem Gehäuse, insbesondere in den Elektronikgehäuse, fixieren, sodass die vorgenannten Bauteile gegen mechanische Beschädigungen und/oder gegen Feuchtigkeitseintritt geschützt sind. Zum Vergießen lassen sich unterschiedliche Gießharze wie beispielsweise Epoxid, Polyester, Polyurethan und Silikon verwenden. Im Falle einer topfartigen Ausgestaltung des Elektronikgehäuses wird bevorzugt der vollständige Topf, in dem die Leiterplatte mit den vorgenannten Elektronikbauteilen vorgesehen ist, vergossen und kann nach einem Aushärten des Gießharzes auf das Motorgehäuse montiert werden.

Die Aufgabe der Erfindung wird weiter durch eine Verwendung einer Abstandseinrichtung gelöst, durch welche Abstandseinrichtung eine Spule beabstandet auf einer Leiterplatte und mit dieser elektronisch leitend verbunden angeordnet ist, wobei die Leiterplatte in einem Gehäuse einer Kreiselpumpe aufweisend einem Motor zum Fördern eines Fluids vorgesehen ist, eine Unterseite der Spule auf der Abstandseinrichtung angeordnet ist und eine Oberseite der Spule innenseitig thermisch an das Gehäuse angebunden ist, wobei die Abstandseinrichtung tischartig mit Beinen gestaltet ist, welche Beine an der Leiterplatte befestigt sind.

Weitere Ausgestaltungen und Vorteile des Verfahrens und der Verwendung ergeben sich für den Fachmann in Analogie zu der oben beschriebenen Kreiselpumpe.

### Kurze Beschreibung der Zeichnungen

Nachfolgend wird die Erfindung unter Bezugnahme auf die anliegenden Zeichnungen anhand bevorzugter Ausführungsbeispiele näher erläutert.

In den Zeichnungen zeigen
- Fig. 1: eine perspektiv schematische Ansicht einer Kreiselpumpe mit teilweise geöffnetem Gehäuse gemäß einem bevorzugten Ausführungsbeispiel der Erfindung, und
- Fig. 2: eine perspektiv schematische Ansicht einer Leiterplatte der Kreiselpumpe gemäß dem bevorzugten Ausführungsbeispiel der Erfindung.

### Detaillierte Beschreibung der Ausführungsbespiele

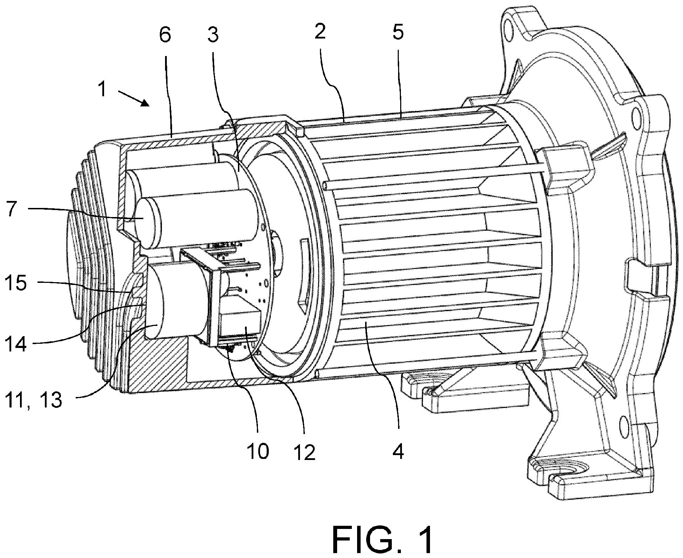

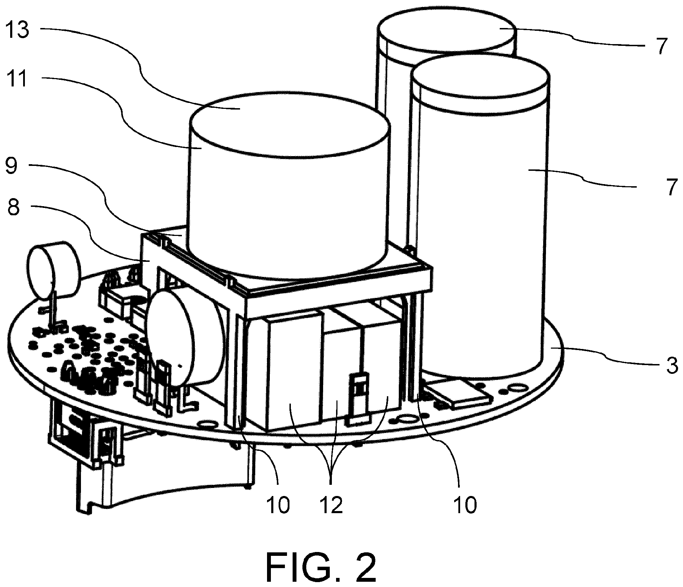

Fig. 1 zeigt eine perspektiv schematische Ansicht einer Kreiselpumpe 1 mit teilweise geöffnetem Gehäuse 2 gemäß einem bevorzugten Ausführungsbeispiel der Erfindung und Fig. 2 zeigt eine perspektiv schematische Ansicht einer Leiterplatte 3 der Kreiselpumpe 1 gemäß dem bevorzugten Ausführungsbeispiel der Erfindung.

Die Kreiselpumpe 1 weist einen in dem Gehäuse 2 angeordneten Motor 4 zum Antreiben eines nicht gezeigten Laufrads zum Fördern eines Fluids auf. Das Gehäuse 2 ist zweigeteilt in ein Motorgehäuse 5, innerhalb dessen der Motor 5 angeordnet ist, und in ein Elektronikgehäuse 6, innerhalb dessen die Leiterplatte 3 angeordnet ist. Das Elektronikgehäuse 6 ist topfartig gestaltet und mit seinem Rand auf das zylinderartig gestaltete Motorgehäuse 5 ortsfest fixiert aufgesetzt. Das Motorgehäuse 5 ist an seiner dem Elektronikgehäuse 6 zugewandten Stirnfläche insbesondere feuchtigkeitsdicht verschlossen, wobei nicht gezeigte Kabel von der Leiterplatte 3 durch die Stirnfläche hin zum Motor 5 geführt sind. Sowohl das Motorgehäuse 5 als auch das Elektronikgehäuse 6 sind aus Grauguss gestaltet.

Auf der in Fig. 2 im Detail dargestellten Leiterplatte 3 sind als elektronische Bauelemente zwei Kondensatoren 7 elektronisch leitend mit nicht gezeigten Leiterbahnen der Leiterplatte 3 verbunden und liegen mit ihrer Unterseite auf der Leiterplatte 3 auf. Die zur Glättung einer Zwischenkreisspannung verwendbaren Kondensatoren 7 weisen eine Kapazität von jeweils > 50 µF auf und sind als zylinderförmige Elektrolytkondensatoren ausgeführt.

Neben den Kondensatoren 7 ist eine tischartig aus einem Kunststoffmaterial gestaltete Abstandseinrichtung 8 vorgesehen. Die Abstandseinrichtung 8 weist eine rechteckige ebene Grundfläche 9 auf, deren jeweiligen Ecken sich von der Grundfläche 9 senkrecht weg erstreckende Beine 10 zugeordnet sind. Die Beine 10 sind mittels durch Bohrungen der Leiterplatte 3 geführte Rasthaken ortsfest an der Leiterplatte 3 mechanisch befestigt, sodass sich die Grundfläche 9 drei cm beabstandet parallel zu der Leiterplatte 3 erstreckt. Daneben sind Ausgestaltungen denkbar, bei denen die Beine 10 aus Metall gestaltet und entsprechend mit der Leiterplatte 3 verlötet sind. In weiteren nicht gezeigten Ausgestaltungen kann die Grundfläche 9 um beispielsweise 2, 4, 5 oder 7 cm beabstandet zu der Leiterplatte 3 angeordnet sein.

Auf der Abstandseinrichtung 8 und entsprechend beabstandet von der Leiterplatte 3 ist eine Spule 11 angeordnet. Die Spule 11 weist die Form eines Zylinders auf, dessen untere Stirnfläche als Unterseite berührend auf der Grundfläche 9 aufliegt, und weist eine Induktivität von 7 mH auf. Anschlüsse der Spule 11 sind durch die Grundfläche 9 hindurchgeführt, an den Beinen 10 entlanggeführt und elektronisch leitend mit nicht gezeigten Leiterbahnen der Leiterplatte 3 verbunden.

Unterhalb der Grundfläche 9 sind elektronisch leitend mit der Leiterplatte 3 verbunden drei weitere elektronische Bauelemente 12 nebeneinander angeordnet, die vorliegend ebenso als Kondensatoren ausgeführt sind, jedoch eine geringere Kapazität als die Elektrolytkondensatoren 7 aufweisen, beispielsweise eine Kapazität zwischen 5 nF und µF aufweisen, und als Folienkondensatoren mit einer quaderartigen Form ausgeführt sind. Die weiteren elektronischen Bauelemente 12 und die Spule 11 sind also übereinander in zwei Ebenen bzw. bezogen auf das Gehäuse 2 axial übereinander angeordnet.

In Draufsicht auf die Leiterplatte 3 sind neben der Abstandseinrichtung 8 weitere in den Figuren nicht bezeichnete elektronische Bauelemente wie beispielsweise Widerstände, Transistoren oder weitere Spulen auf der Leiterplatte 3 vorgesehen. Diese elektronischen Bauelemente bilden zusammen mit der Spule 11, den weiteren elektronischen Bauelementen 12 und den Kondensatoren 7 einen Frequenzumrichter und/oder eine Steuerung für den Motor 4 aus.

Zurückkommend auf Fig. 1 ist eine obere Stirnfläche als Oberseite 13 der Spule 11 thermisch an das Gehäuse 2 bzw. das Elektronikgehäuse 6 angebunden. Dazu ist in den Elektronikgehäuse 6 innenseitig an diesem eine kreisrunde Ausnehmung 14 vorgesehen, die in ihrem Innendurchmesser zum Außendurchmesser der zylinderförmigen Spule 11 korrespondiert, sodass die Spule 11 berührend und mit ihrer Oberseite 13 formschlüssig an dem Elektronikgehäuse 6 anliegt. Derart ist die Spule 11 in Bezug auf regelmäßig an der Kreiselpumpe 1 auftretende Schwingungen ortsfest fixiert und kann nicht von der Leiterplatte 3 abreißen.

Alternativ oder zusätzlich kann zwischen der Oberseite 13 der Spule 11 und dem Elektronikgehäuse 6 ein wärmeleitfähiger Gap Filler bzw. eine Wärmeleitpaste vorgesehen sein, um die thermische Anbindung zu realisieren. Die Wärmeleitpaste kann Silikonöl, Polyethylenglykol (PEG) mit Zinkoxid oder Aluminium-, Kupfer-, Graphit- und Silberpartikel als Füllstoff umfassen.

Außenseitig an dem Elektronikgehäuse 6 sind eine Mehrzahl beanstandeter Kühlrippen 15 vorgesehen, die axial korrespondierend zu der Oberseite 13 der Spule 11 angeordnet sind. Die Kondensatoren 7 liegen mit ihrer jeweiligen Oberseite jeweils auch berührend an der Innenseite des Elektronikgehäuses 6 an. Derart sind die Kondensatoren 7 ebenso thermisch an das Elektronikgehäuse 6 angebunden und können ebenso wie die Spule 11 mittels der Kühlrippen 15 Wärme an ein Umfeld der Kreiselpumpe 1 abgeben. Ferner sind die Kondensatoren 7 derart auch in ihre Position fixiert und insofern unempfindlich gegenüber Schwingungen der Kreiselpumpe 1 angeordnet.

Bei einem analogen Verfahren zum Anordnen der Spule 11 in dem Gehäuse 2 der Kreiselpumpe 1 wird zunächst die Abstandseinrichtung 8 auf der Leiterplatte 3 in dem Gehäuse 2 angeordnet und mit der Leiterplatte 3 mechanisch verbunden. Die Spule 11 wird mit ihrer Unterseite auf der Abstandseinrichtung 8 angeordnet, sodass die Spule 11 beab-standet zu der Leiterplatte 3 zu liegen kommt. Durch elektronisches Verbinden von Anschlüssen der Spule 11 mit der Leiterplatte 3 wird die Spule 11 ortsfest in Bezug auf die Abstandseinrichtung 8 sowie die Leiterplatte 3 fixiert. Schließlich erfolgt das thermische Anbinden der Oberseite 13 der Spule 11 mit der Innenseite des Gehäuses 2.

In einem letzten Schritt kann das topfartig gestaltete Elektronikgehäuse 6, in dem die Leiterplatte 3 mit der Spule 11 sowie der Abstandseinrichtung 8, den Kondensatoren 7 sowie den weiteren elektronischen Bauelementen 12 mit einem Harz vergossen werden. Im Ergebnis lässt sich derart eine schwingungsstabile Anordnung insbesondere der Spule 11 in den Elektronikgehäuse 6 sowie eine höhere Packungsdichte auf der Leiterplatte 3 erreichen.

Entsprechend zielt eine Verwendung der Abstandseinrichtung 8 darauf ab, die Spule 11 beabstandet der Leiterplatte 3 anzuordnen und mit dieser elektronisch leitend zu verbinden, wobei die Leiterplatte 3 in dem Gehäuse 2 der Kreiselpumpe 1 aufweisend den Motor 4 zum Fördern eines Fluids vorgesehen ist, eine Unterseite der Spule 11 auf der Abstandseinrichtung 8 angeordnet ist und die Oberseite 13 der Spule 11 thermisch an das Gehäuse 2 angebunden ist.

Die beschriebenen Ausführungsbeispiele sind lediglich Beispiele, die im Rahmen der Ansprüche auf vielfältige Weise modifiziert und/oder ergänzt werden können. Jedes Merkmal, dass für ein Ausführungsbeispiel einer bestimmten Kategorie beschrieben wurde, kann auch in entsprechender Weise in einem Ausführungsbeispiel einer anderen Kategorie eingesetzt werden.

### Bezugszeichenliste

| | |
|---|---|
| Kreiselpumpe | 1 |
| Gehäuse | 2 |
| Leiterplatte | 3 |
| Motor | 4 |
| Motorgehäuse | 5 |
| Elektronikgehäuse | 6 |
| Kondensator | 7 |
| Abstandseinrichtung | 8 |
| Grundfläche | 9 |
| Bein | 10 |
| Spule | 11 |
| Elektronisches Bauelement | 12 |
| Oberseite | 13 |
| Ausnehmung | 14 |
| Kühlrippe | 15 |

## Patentansprüche

1. Kreiselpumpe (1) aufweisend einem Motor (4) zum Fördern eines Fluids und ein Gehäuse (2), wobei in dem Gehäuse (2) eine Leiterplatte (3), eine mit der Leiterplatte (3) elektronisch leitend verbundene Spule (11), aufweisend eine Unterseite und eine Oberseite (13), und eine auf der Leiterplatte (3) angeordnete Abstandseinrichtung (8) vorgesehen ist, die Unterseite der Spule (11) auf der Abstandseinrichtung (8) und die Spule (11) derart beabstandet zu der Leiterplatte (3) angeordnet ist und die Oberseite (13) der Spule (11) thermisch an das Gehäuse (2) angebunden ist, **dadurch gekennzeichnet, dass** die Abstandseinrichtung (8) tischartig mit Beinen (10) gestaltet ist, welche Beine (10) an der Leiterplatte (3) befestigt sind.

2. Kreiselpumpe (10) nach dem vorhergehenden Anspruch, mit wenigstens einem elektronischen Bauelement (12), welches zwischen der Spule (11) und der Leiterplatte (3) angeordnet ist.

3. Kreiselpumpe (1) nach einem der vorhergehenden Ansprüche, wobei die Oberseite (13) der Spule (11) berührend an dem Gehäuse (2) anliegt und/oder zwischen der Oberseite (13) der Spule (11) und dem Gehäuse (2) eine Wärmeleitpaste vorgesehen ist.

4. Kreiselpumpe (1) nach einem der vorhergehenden Ansprüche, wobei das Gehäuse (2) außenseitig im Bereich der Spule (11) Kühlrippen (15) aufweist.

5. Kreiselpumpe (1) nach einem der vorhergehenden Ansprüche, wobei die Abstandseinrichtung (8) mechanisch mit der Leiterplatte (3) verbunden ist, insbesondere mittels Rasthaken, und/oder mit der Leiterplatte (3) verlötet ist.

6. Kreiselpumpe (1) nach einem der vorhergehenden Ansprüche, wobei das Gehäuse (2) innenseitig eine Ausnehmung (14) aufweist, von welcher die Oberseite (13) der Spule (11) insbesondere formschlüssig aufgenommen ist.

7. Kreiselpumpe (1) nach einem der vorhergehenden Ansprüche, mit wenigstens einem Kondensator (7), welcher neben der Abstandseinrichtung (8) auf der Leiterplatte (3) angeordnet ist und insbesondere innenseitig an dem Gehäuse (2) anliegt.

8. Kreiselpumpe (1) nach einem der vorhergehenden Ansprüche, wobei auf der Leiterplatte (3) ein Frequenzumrichter für den Motor (4) umfassend die Spule (11) vorgesehen ist.

9. Kreiselpumpe (1) nach einem der vorhergehenden Ansprüche, wobei das Gehäuse (2) ein den Motor (4) aufnehmendes Motorgehäuse (5) und ein die Leiterplatte (3) aufnehmendes Elektronikgehäuse (6) aufweist und das Elektronikgehäuse (6) auf das Motorgehäuse (5) aufgesetzt ist.

10. Verfahren zum Anordnen einer Spule (11), aufweisend eine Unterseite und eine Oberseite (13), in einem Gehäuse (2) einer Kreiselpumpe (1) mit einem Motor (4) zum Fördern eines Fluids, mit den Schritten:
Anordnen einer Abstandseinrichtung (8) auf einer Leiterplatte (3) in dem Gehäuse (2), wobei die Abstandseinrichtung (8) tischartig mit Beinen (10) gestaltet ist, welche Beine (10) an der Leiterplatte (3) befestigt sind,
Anordnen der Unterseite der Spule (11) auf der Abstandseinrichtung (8), so dass die Spule (11) beabstandet zu der Leiterplatte (3) angeordnet ist,
elektronisch leitendes Verbinden der Spule (11) mit der Leiterplatte (3), und
thermisches Anbinden der Oberseite (13) der Spule (11) an das Gehäuse (2).

11. Verfahren nach dem vorhergehenden Anspruch, mit dem Schritt:
Vergießen der Leiterplatte (3), der Abstandseinrichtung (8) und der Spule (11) in dem Gehäuse (2).

12. Verwendung einer Abstandseinrichtung (8), durch welche eine Spule (11) beabstandet auf einer Leiterplatte (3) und mit dieser elektronisch leitend verbunden angeordnet ist, wobei die Leiterplatte (3) in einem Gehäuse (2) einer Kreiselpumpe (1) aufweisend einem Motor (4) zum Fördern eines Fluids vorgesehen ist, eine Unterseite der Spule (11) auf der Abstandseinrichtung (8) angeordnet ist, eine Oberseite (13) der Spule (11) thermisch an das Gehäuse (2) angebunden ist und die Abstandseinrichtung (8) tischartig mit Beinen (10) gestaltet ist, welche Beine (10) an der Leiterplatte (3) befestigt sind.

## Claims

1. A centrifugal pump (1) having a motor (4) for conveying a fluid and a casing (2), wherein a printed circuit board (3), a coil (11) electronically conductively connected to the printed circuit board (3) and having a lower side and an upper side (13), and a spacing device (8) disposed on the printed circuit board (3) is provided, the lower side of the coil (11) is disposed on the spacing device (8) and the coil (11) is spaced apart from the printed circuit board (3), and the upper side (13) of the coil (11) is thermally attached to the casing (2), **characterised in that** the spacing device (8) is formed in a table-like manner with legs (10), which legs (10) are fastened to the printed circuit board (3).

2. The centrifugal pump (1) according to the preceding claim, with at least one electronic component (12), which is disposed between the coil (11) and the printed circuit board (3).

3. The centrifugal pump (1) according to any one of the preceding claims, wherein the upper side (13) of the coil (11) rests with contact against the casing (2) and/or a heat-conductive paste is provided between the upper side (13) of the coil (11) and the casing (2).

4. The centrifugal pump (1) according to any one of the preceding claims, wherein the casing (2) has cooling fins (15) on the outer side in the region of the coil (11).

5. The centrifugal pump (1) according to any one of the preceding claims, wherein the spacing device (8) is mechanically connected to the printed circuit board (3), in particular by means of detent hooks, and/or is soldered to the printed circuit board (3).

6. The centrifugal pump (1) according to any one of the preceding claims, wherein the casing (2), on the inner side, has a recess (14), by which the upper side (13) of the coil (11) is received, in particular form-fittingly.

7. The centrifugal pump (1) according to any one of the preceding claims, with at least one capacitor (7), which is disposed next to the spacing device (8) on the printed circuit board (3) and in particular bears against the inner side of the casing (2).

8. The centrifugal pump (1) according to any one of the preceding claims, wherein a frequency converter for the motor (4) comprising the coil (11) is provided on the printed circuit board (3).

9. The centrifugal pump (1) according to any one of the preceding claims, wherein the casing (2) comprises a motor casing (5) receiving the motor (4) and an electronics casing (6) receiving the printed circuit board (3), and the electronics casing (6) is placed onto the motor casing (5).

10. A method for arranging a coil (11), comprising a lower side and an upper side (13), in a casing (2) of a centrifugal pump (1) with a motor (4) for conveying a fluid, said method comprising the steps of:
disposing a spacing device (8) on a printed circuit board (3) in the casing (2), wherein the spacing device (8) is formed in a table-like manner with legs (10), which legs (10) are secured to the printed circuit board (3),
disposing the lower side of the coil (11) on the spacing device (8) so that the coil (11) is disposed at a distance from the printed circuit board (3),
electronically conductively connecting the coil (11) to the printed circuit board (3), and
thermally attaching the upper side (13) of the coil (11) to the casing (2).

11. The method according to the preceding claim, comprising the step of
potting the printed circuit board (3), the spacing device (8) and the coil (11) in the casing (2).

12. Use of a spacing device (8), by which a coil (11) is disposed spaced apart on a printed circuit board (3) and electronically conductively connected thereto, wherein the printed circuit board (3) is provided in a casing (2) of a centrifugal pump (1) comprising a motor (4) for conveying a fluid, a lower side of the coil (11) is disposed on the spacing device (8), an upper side (13) of the coil (11) is thermally attached to the casing (2), and the spacing device (8) is formed in a table-like manner with legs (10), which legs (10) are secured to the printed circuit board (3).

## Revendications

1. Pompe centrifuge (1) ayant un moteur (4) destiné à convoyer un fluide et un carter (2), dans laquelle une carte de circuit imprimé (3), une bobine (11) connectée de manière électroniquement conductrice à la carte de circuit imprimé (3) et ayant un côté inférieur et un côté supérieur (13), et un dispositif d'espacement (8) disposé sur la carte de circuit imprimé (3) est pourvu, le côté inférieur de la bobine (11) est disposé sur le dispositif d'espacement (8) et la bobine (11) est espacée de la carte de circuit imprimé (3), et le côté supérieur (13) de la bobine (11) est attaché thermiquement au carter (2), **caractérisé en ce que** le dispositif d'espacement (8) est formé en table avec des pieds (10), lesquels pieds (10) sont fixés à la carte de circuit imprimé (3).

2. Pompe centrifuge (1) selon la revendication précédente, avec au moins un composant électronique (12), qui est disposé entre la bobine (11) et la carte de circuit imprimé (3).

3. Pompe centrifuge (1) selon l'une quelconque des revendications précédentes, dans laquelle le côté supérieur (13) de la bobine (11) repose au contact du carter (2) et/ou une pâte thermoconductrice est pourvue entre le côté supérieur (13) de la bobine (11) et le carter (2).

4. Pompe centrifuge (1) selon l'une quelconque des revendications précédentes, dans laquelle le carter (2) a des ailettes de refroidissement (15) sur le côté extérieur de la région de la bobine (11).

5. Pompe centrifuge (1) selon l'une quelconque des revendications précédentes, dans laquelle le dispositif d'espacement (8) est relié mécaniquement à la carte de circuit imprimé (3), en particulier au moyen de crochets de détente, et/ou est relié par brasage à la carte de circuit imprimé (3).

6. Pompe centrifuge (1) selon l'une quelconque des revendications précédentes, dans laquelle le carter (2), sur le côté intérieur, a un évidement (14), par lequel le côté supérieur (13) de la bobine (11) est reçu, en particulier par ajustement de forme.

7. Pompe centrifuge (1) selon l'une quelconque des revendications précédentes, avec au moins un condensateur (7), qui est disposé à proximité du dispositif d'espacement (8) sur la carte de circuit imprimé (3) et en particulier s'appuie contre le côté intérieur du carter (2).

8. Pompe centrifuge (1) selon l'une quelconque des revendications précédentes, dans laquelle un convertisseur de fréquence pour le moteur (4) comprenant la bobine (11) est pourvu sur la carte de circuit imprimé (3).

9. Pompe centrifuge (1) selon l'une quelconque des revendications précédentes, dans laquelle le carter (2) comprend un carter de moteur (5) recevant le moteur (4) et un carter de système électronique (6) recevant la carte de circuit imprimé (3), et le carter de système électronique (6) est placé sur le carter de moteur (5).

10. Procédé d'agencement d'une bobine (11), comprenant un côté inférieur et un côté supérieur (13), dans un boîtier (2) d'une pompe centrifuge (1) avec un moteur (4) pour convoyer un fluide, ledit procédé comprenant les étapes consistant à :
disposer un dispositif d'espacement (8) sur une carte de circuit imprimé (3) dans le boîtier (2), dans laquelle le dispositif d'espacement (8) est formé en table avec des pieds (10), lesquels pieds (10) sont fixés à la carte de circuit imprimé (3),
disposer le côté inférieur de la bobine (11) sur le dispositif d'espacement (8) de telle sorte que la bobine (11) est disposée à une distance de la carte de circuit imprimé (3),
connecter de manière électroniquement conductrice la bobine (11) à la carte de circuit imprimé (3), et
attacher thermiquement le côté supérieur (13) de la bobine (11) au carter (2).

11. Procédé selon la revendication précédente, comprenant l'étape consistant à
placer la carte de circuit imprimé (3), le dispositif d'espacement (8) et la bobine (11) dans le boîtier (2).

12. Utilisation d'un dispositif d'espacement (8), par lequel une bobine (11) est disposée de manière espacée sur une carte de circuit imprimé (3) et connectée de manière électroniquement conductrice à celle-ci, dans laquelle la carte de circuit imprimé (3) est pourvue dans un carter (2) d'une pompe centrifuge (1) comprenant un moteur (4) pour convoyer un fluide, un côté inférieur de la bobine (11) est disposé sur le dispositif d'espacement (8), un côté supérieur (13) de la bobine (11) est attaché thermiquement au carter (2), et le dispositif d'espacement (8) est formé en table avec des pieds (10), lesquels pieds (10) sont fixés à la carte de circuit imprimé (3).
